(19) Europäisches Patentamt
European Patent Office
Office européen des brevets

(11) Publication number: **0 030 451 A2**

# (12) EUROPEAN PATENT APPLICATION

(21) Application number: **80304351.2**

(22) Date of filing: **03.12.80**

(51) Int. Cl.³: **B 01 D 13/00**, B 01 D 13/04

(30) Priority: **06.12.79 JP 157403/79**

(43) Date of publication of application: **17.06.81**
**Bulletin 81/24**

(84) Designated Contracting States: **DE FR GB**

(71) Applicant: **TEIJIN LIMITED, 11, 1-Chome, Minamihonmachi Higashi-ku, Osaka-shi Osaka (JP)**

(72) Inventor: **Watanabe, Takashi, Teijin Ozu Apt. 12 28-1, Ozu-cho 1-chome, Iwakuni-shi Yamaguchi-ken, 740 (JP)**
Inventor: **Tamura, Hiroki, Teijin Yamanouchi Apt. 3 1-3, Yamatecho 3-chome, Iwakuni-shi Yamaguchi-ken, 740 (JP)**
Inventor: **Nishimori, Genryo, Ichinokura Apt. 403 21-16, Chuo 5-chome, Ohta-ku Tokyo, 143 (JP)**
Inventor: **Iwata, Kazumi, 12-23, Motomachi 4-chome, Iwakuni-shi Yamaguchi-ken, 740 (JP)**
Inventor: **Hara, Shigeyoshi, Teijin Yamanouchi Apt. 14 1-40, Yamatecho 3-chome, Iwaku-shi Yamaguchi-ken, 410 (JP)**

(74) Representative: **Votier, Sidney David, CARPMAELS & RANSFORD 43, Bloomsbury Square, London WC1A 2RA (GB)**

(54) **Method for recovering efficiency of semipermeable membrane.**

(57) A method for recovering the efficiency of a semipermeable membrane which comprises treating said semipermeable membrane which has an active layer substantially consisting of a polymeric material having bond units containing a bond expressed by

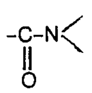

in the polymeric chain with at least one kind of organic solvent, or its aqueous solution, selected from a group of lower aliphatic alcohol, lower aliphatic ketone and lower aliphatic ester when the water flux efficiency of the semipermeable membrane is decreased due to the compaction which results from the reverse osmosis operation conducted under high temperature and/or high pressure.

EP 0 030 451 A2

# METHOD FOR RECOVERING EFFICIENCY OF SEMIPERMEABLE MEMBRANE

## TECHNICAL FIELD

The present invention relates to a method for recovering the efficiency of a semipermeable membrane. More particularly, it relates to a method for recovering the water flux efficiency of the membrane decreased by the operation under high pressure by means of a simple process. More particularly, it relates to a method for recovering the water flux efficiency of the membrane remarkably decreased by the reverse osmosis operation conducted under high temperature and/or high pressure.

## BACKGROUND ART

What we refer to as semipermeable membrane in this invention is a membrane which has selective permeability to specific molecules. It is widely used to remove a very small quantity of contaminated molecules dissolved or diffused in a liquid.

Within recent years, reverse osmosis has added a great deal of interest to the utilization in such field that involve purification of liquids. This is of especial importance when utilizing this system in the purification of water, saline and brackish water. Likewise, the process is also used to remove impurities from liquids such as water and blood in the fields of dialysis. When utilizing reverse osmosis in the purification of brackish water, pressure higher than osmotic pressure of the brackish water is applied to the feed solution from which purified water is obtained by

BAD ORIGINAL

means of a semipermeable membrane. Pure water diffuses through the membrane while the sodium chloride molecules or other impurities which may be present in the water are caught by the membrane.

The efficiency of the reverse osmosis method is greatly affected by the properties of the semipermeable membrane used. Much effort has therefore been made to develop membranes having high performance, and resulted in some specific suggestions.

For instance, U.S. Patents Nos.3,133,132 and 3,113,137 disclose the early Loeb-type membranes made of cellulose diacetate. These membranes are asymmetric membranes which are characterized by a very thin, dense surface layer or skin that is supported upon an integrally attached, much thicker supporting layer. These known membranes based on cellulose diacetate have many defects of poor compaction, low resistance to chemical and biological degradation, a short service life, and insufficient flux and salt rejection characteristics.

Attempts to overcome these defects of the Loeb-type membranes have recently brought about several types of membranes composed basically of synthetic polymers. For example, U.S. Patent No. 3,951,815 discloses a composite semipermeable membrane composed of a microporous substrate and an extremely thin film formed of a crosslinked, grafted polyethyleneimine disposed on one surface of said microporous substrate that has been crosslinked with a di- or tri-functional compound such as isophthaloyl chloride and grafted with a graft reactant such as acrylonitrile or epichlorohydrin. U.S. Patent No. 4,005,012 describes a composite semipermeable membrane composed of an extremely thin film formed by contacting an amine-modified polyepihalohydrin with a polyfunctional agent on a microporous substrate to form this film on one surface of the

microporous substrate. Also, U.S. Patent No.4,039,440 discloses a reverse osmosis membrane prepared in situ on a porous support by initial formation of a layer of polyethyleneimine on the support, followed by interfacial reaction with a polyfunctional reagent to produce a thin surface coating which possesses salt barrier characteristics.

The membrane composed basically of cross-linked polyethyleneimine disclosed in U.S. Patent No.4,039,440 has a high salt rejection, but has the defect of insufficient water flux and low oxidation resistance (e.g., low resistance to deterioration caused by the presence of chlorine in the feed saline or brackish water). As one method of improving the oxidation resistance, U.S. Patent No.3,951,815 suggests the grafting of acrylonitrile to the polyethyleneimine. The acrylonitrile grafted and cross-linked polyethyleneimine shows some improvement in oxidation resistance, but as the membrane is used continuously during a long period of time, its degradation advances gradually. Moreover, it suffers from the serious defect of markedly reduced water flux.

The membrane composed basically of the amine-modified polyepihalohydrin disclosed in U.S. Patent No.4,005,012 exhibits a high salt rejection but its water flux is not sufficient. It has been strongly desired to develop membranes having a high water flux.

To achieve this object, a co-inventor of the present invention has disclosed various types of semipermeable membranes in West German Laid-Open Patent Publication No.2,822,784.1, British Laid-Open Patent Publication Nos.2,000,163 and 2,027,614 and European Patent Publication No.8,945.

However, none of the abovementioned membranes have been perfectly free from the degradation of

their functional performances, especially in water flux, which occurs during the reverse osmosis operation. As for the causes of such degeneracy of water flux efficiency, fouling may be mentioned first of all. When water flux of the membrane is decreased due to the fouling, and performances of the membrane can be recovered with comparative ease simply by cleaning or washing the fouled membrane.

For instance, such method for recovering efficiency of the fouled membrane is disclosed in U.S. Patent No.4,136,025 and Japanese Laid-Open Patent Publication No.79,177/79. Since the operation pressure is 10 $kg/cm^2$ at the highest in these inventions, no compaction takes place in the membrane. The degeneracy of water flux efficiency of the above inventions is simply due to fouling without compaction and the efficiency of the membrane can mostly be recovered by cleaning only. However, in the reverse osmosis process which is usually operated under high pressure of 40 to 70 $kg/cm^2$, the membrane is subjected not only to fouling but also to compaction which results from high pressure and comes to lose its water flux efficiency gradually even if it does not develop fouling. It has been deemed rather difficult to revive the membrane from such decrease of water flux resulting from compaction and those membranes with decreased water flux resulting from compaction have hitherto been regarded as nonuseable any more and replaced with new ones. As the exchange of membranes requires a highly complicated process, studies are now being made matter-of-factly to develop a new module which offers an easy access to the exchange of membranes. The development of membranes which are free from a problem of compaction or the development

of a simple method of reviving the membrane with decreased flux resulting from compaction has hitherto been strongly looked for to secure a troubleproof and inexpensive operation.

## DISCLOSURE OF THE INVENTION

The object of the present invention is to provide a method for recovering water flux of membrane decreased due to compaction during the reverse osmosis operation.

According to this invention, there is provided a method which comprises treating a semipermeable membrane which has an active layer substantially consisting of a polymeric material having bond units containing a bond expressed by the following formula (I)

$$-\underset{\underset{O}{\|}}{C}-N\langle \quad \ldots\ldots\ldots\ldots\ldots\ldots\ldots \quad (I)$$

in the chain with at least one kind of organic solvent, or its aqueous solution, selected from a group of lower aliphatic alcohol, lower aliphatic ketone and lower aliphatic ester when water flux of said semipermeable membrane is decreased due to compaction resulting from the operation conducted under the conditions which satisfy the following formula (II)

$$P \geqq -\frac{2}{3}T + 47 \quad \ldots\ldots\ldots\ldots\ldots \quad (II)$$

(where P indicates operation pressure ($kg/cm^2 \cdot G$) and T indicates operation temperature (°C), satisfying $P \geqq 20$ ($kg/cm^2 \cdot G$) and $T \geqq 5$ (°C) respectively).

The characteristic feature of the present invention is that the proposed method can recover water flux of the membrane decreased by compaction, which recovery has been deemed quite impossible,

under a simple process with the use of a very familiar organic solvent.

Moreover, the feature can not be emphasized enough in that the present method can achieve not only the recovery of degraded water flux due to compaction occurring under the operation conditions of normal temperature which are common in industries but also the satisfactory recovery of degraded water flux due to sturdy compaction occurring under the operation conditions of very high temperature of about 60°C in the reverse osmosis process.

Furthermore, the present invention makes a special feature of showing a remarkable effect on a semipermeable membrane which has an active layer substantially consisting of a polymeric material having bond units containing a bond expressed by said formula (I) of the present invention, though the method not only shows no recovering effect on a semipermeable membrane of cellulose acetate type but also remarkably degrades its salt rejection characteristic.

Particularly, the method of the present invention shows a remarkable effect when it is adopted to a semipermeable membrane which has an active layer substantially consisting of a polymeric material having bond units containing a bond expressed by said formula (I) adjacent to an aromatic ring.

## DETAILED DESCRIPTION OF THE INVENTION

The semipermeable membrane to which the present invention is adopted has an active layer substantially consisting of a polymeric material having bond units containing a bond expressed by the following formula (I).

$$-\underset{\underset{O}{\|}}{C}-N< \quad \cdots\cdots \quad (I)$$

Typical examples of the bond units containing a bond expressed by the abovementioned formula are as follows:

(i) Amide bond

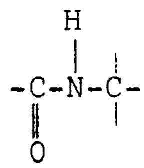 , 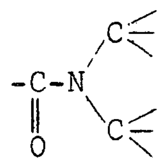

(ii) Urea bond

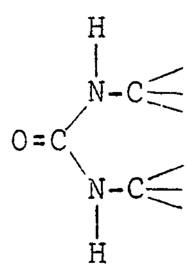 , 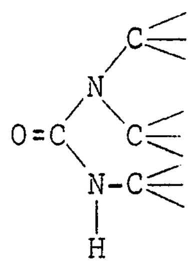 , 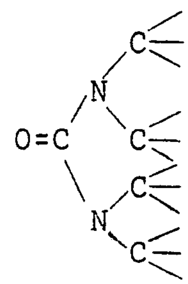

(iii) Hydrazide bond

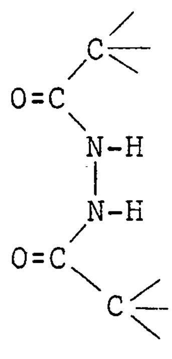 , 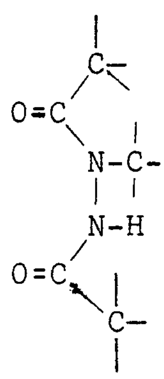

The bond units of the present invention includes the cases in which these bonds units take a cyclic structure in addition to those mentioned above.

For instance, the following structures may be mentioned:

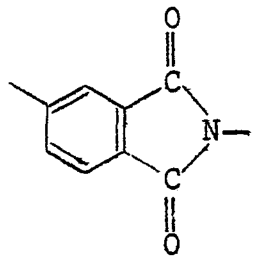 , 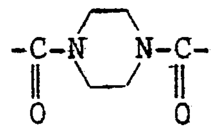 ; 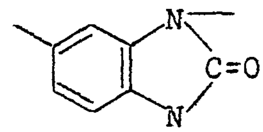 ,

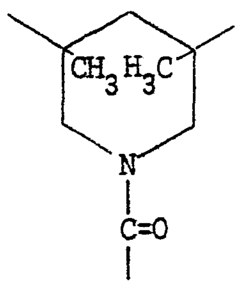

The polymeric materials include ones which have said bond in the main chain, ones which have said bond in the side chain, and ones which have said bond in the bridged structure.

Also those polymeric materials, which are disclosed in the specifications of U.S. Patent Nos. 3,567,632/4,085,090/3,951,815/4,005,012 and 4,039,440 and those disclosed in the specifications of British Laid-Open Patent Publication Nos.2,000,163 and 2,027,614, European Patent Publication Nos. 8,945 and 10,425, and West German Laid-Open Patent Publication No.2,822,784.1, that are related to the semipermeable membrane like the present invention, may be used in the present invention.

Concrete examples of such compound may include ones comprised of the following constituent part:

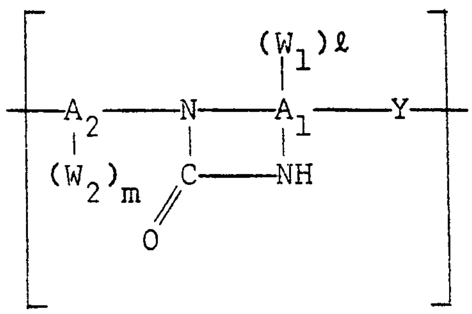 ...... (III)

(where $A_1$ indicates an aromatic group having a valence of $(3+\ell)$, with two nitrogen atoms and $W_1$ bonded to the nuclear carbon atoms of the aromatic group $A_1$; $A_2$ indicates an aromatic group having a valence of $(2 + m)$; Y is -O- or $-\underset{\substack{|\\R_1}}{N}-$ , in which

$R_1$ is a hydrogen atom or a monovalent hydrocarbon residue; the two nitrogen atoms bonded to $A_1$ are bonded to the ring carbon atoms at the ortho-position of the aromatic group $A_1$; $\ell$ and m are identical or different, each representing an integer of 0 to 3; when Y is $-\underset{H}{N}-$ and one of $W_1$ groups is bonded to the ring carbon atom at the ortho-position of the aromatic group $A_1$ together with Y, said $W_1$, Y and $A_1$ can form a 5-membered ring same as

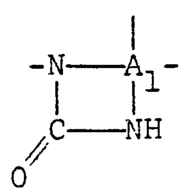

in which all symbols are the same as defined above; and when $W_1$ does not form a 5-membered ring, $W_1$ and $W_2$ are identical or different and represent at least one group selected from substituted nitrogen-containing groups derived from a primary amino group).

Among the compounds of a formular similar to the above, there is a more preferable one which is

expressed by the following formula:

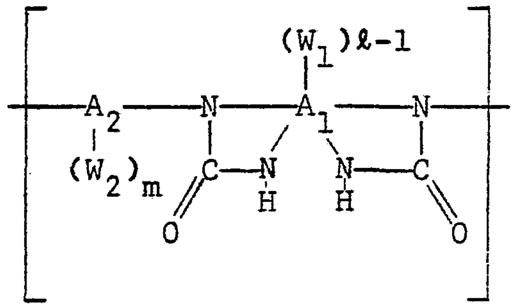

(where $A_1$, $A_2$, $W_1$, $W_2$, $\ell$ and m are as defined with regard to formula (III), with the proviso that $\ell - 1 \geq 0$).

In addition to the above, there is one which has a structural unit expressed by the following formula:

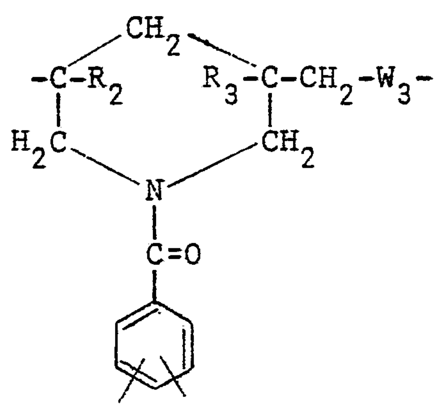

(where each of $R_2$ and $R_3$ indicates a hydrogen atom or a methyl group, and $W_3$ indicates a direct bonding or a sulfonyl group ($-SO_2-$)).

To give another examples having a more concrete constituent part, there are following ones:

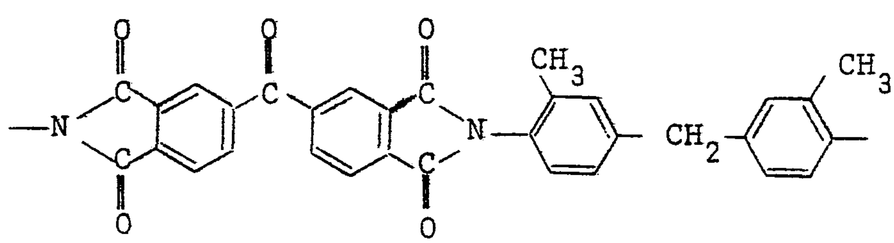

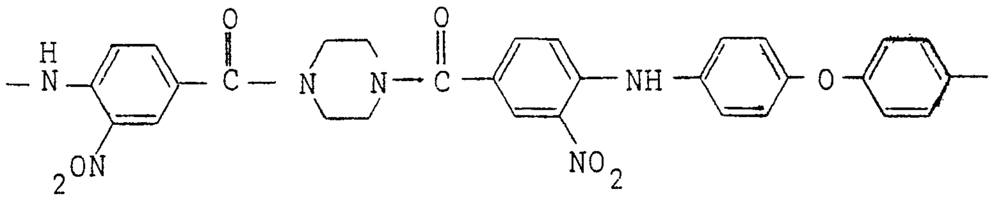

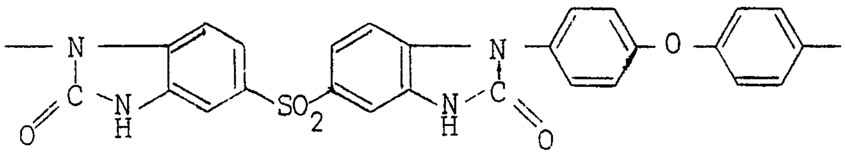

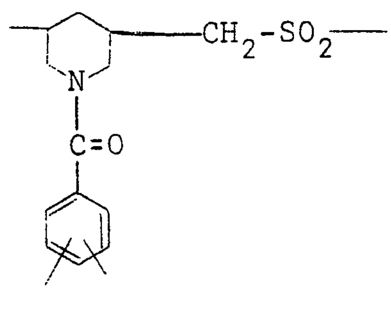

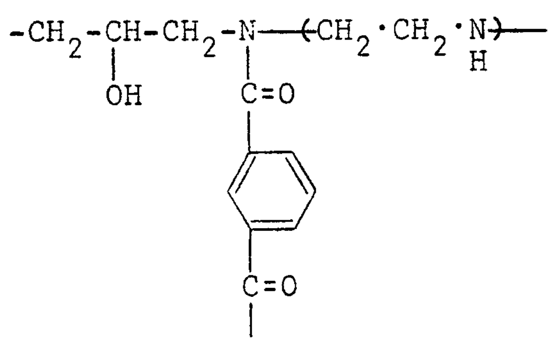

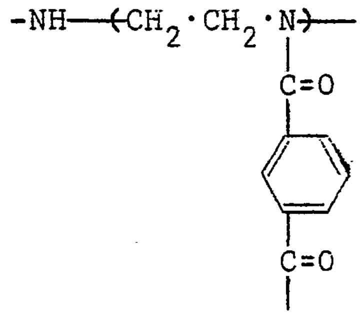

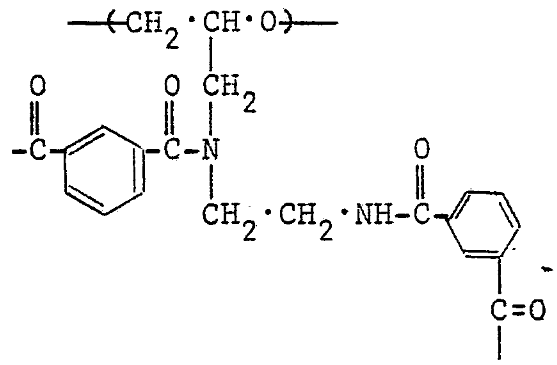

The method of the present invention displays an effect to revive the aforementioned semipermeable membrane from its decreased water flux resulting from compaction caused during the reverse osmosis operation conducted on said semipermeable membrane under the operation conditions expressed by the following formula (II)

$$P \geqq -\frac{2}{3}T + 47 \quad \ldots\ldots\ldots\ldots\ldots \text{(II)}$$

(where P indicates operation pressure ($kg/cm^2 \cdot G$) and T indicates operation temperature (°C), satisfying $P \geqq 20$ ($kg/cm^2 \cdot G$) and $T \geqq 5$ (°C) respectively).

In the above formula, P indicates operation pressure and its unit is expressed by "$kg/cm^2 \cdot G$" and here P is 20 $kg/cm^2 \cdot G$ or higher. An upper limit may not necessarily be set to the operation pressure;

however, the reverse osmosis operation is usually conducted under pressure lower than 150 $kg/cm^2 \cdot G$, preferably under pressure lower than 100 $kg/cm^2 \cdot G$. The development of compaction, of course, depends on the differential pressure obtained on both sides of the membrane; however, it may be deemed that the operation pressure substantially causes the development of compaction, since the permeate side of a membrane is usually not brought under positive pressure and the flow resistance on the permeate side is small.

In the formula, T indicates operation temperature and its unit is "°C". A cellulose diacetate membrane which is now widely used, though it is not the object of the present invention, is not used in the high temperature operation because of its low heat resistance, while the membrane which is the object of the present invention, especially the membrane of aromatic type such as polybenzimidazolone and the like, is often used in the high temperature operation because of its high heat resistance. However, in view of the limitations of organic synthetic polymer, even such membrane is usually used in the operation conducted at 150°C or lower, preferably at 80°C or lower, more preferably at 60°C or lower. As for the lower limit of operation temperature, the operation is possible so far as the permeant liquid remains fluid. Since water flux increases when the operation is conducted at higher temperature, the operation is usually conducted at normal temperature or at higher temperature when no restraint is encountered with the thermal stability of the substance to be treated. The operation is conducted at temperature lower than normal temperature for the substance whose thermal stability is low.

More preferable conditions of pressure vs.

temperature of the reverse osmosis operation in the present invention are in the scope expressed by the following formulae

$$-\frac{2}{3}T + 47 \leq P \leq -4T + 340$$

$$20 \leq P \leq 100$$

$$5 \leq T \leq 80$$

(where P and T are as defined in the foregoing). When the operation is conducted under conditions outside the abovementioned scope, the membrane sometimes develops permanent set which makes the present invention display its recovery effect not too much.

When the reverse osmosis operation is conducted within the scope of pressure and temperature mentioned above even on a limpid liquid which does not cause fouling, water flux decreases gradually. This phenomenon is observed more remarkably when the operation is conducted under higher pressure and higher temperature. The decrease of water flux which does not arise from fouling is called compaction. For instance, water flux decreases even if the operation is conducted under the conditions of low temperature which satisfies the aforementioned formula (II) on pure water which is deemed to cause no fouling. When this operation is conducted under higher temperature, water flux decreases more remarkably. The same phenomenon is observed when the reverse osmosis operation is conducted on an aqueous solution of NaCl, which is free from an inorganic suspension or organic solute or suspension, which never causes fouling.

No method has ever been developed to recover the membrane from the decreased water flux which

does not arise from fouling. The semipermeable membrane with decreased water flux has been disposed of. However, it has now become possible to revive thus disabled membrane to almost its initial level of water flux according to the present invention.

In case where the recovery operation is conducted on the used electroplating electrolyte through a reverse osmosis process, fouling occurrs due to inorganic substances and even when fouling due to inorganic substances is removed by washing the membrane with acid or alkali, the decreased water flux can be revived only slightly. However, decreased water flux, which can hardly be recovered by the removal of fouling as mentioned above, can be recovered almost to its initial level according to the present invention. It is now made clear from what is described above that the present invention offers a method for recovering decreased water flux arising from compaction which has not been solved by any means.

The object of the present invention can be achieved by bringing the semipermeable membrane, whose water flux has been decreased during the abovementioned operation, into contact with at least one kind of organic solvent, or its aqueous solution, selected from a group of lower aliphatic alcohol, lower aliphatic keton and lower aliphatic ester. What is referred to as "lower aliphatic" in the present invention indicates having a aliphatic group who has 1 to 5, preferably 1 to 3, carbon atoms.

As lower aliphatic alcohol, there are methanol, ethanol, propanol, isopropanol, etc.; as lower aliphatic keton, there are acetone, methyl ethyl ketone, methyl isobutyl ketone, etc.; and as lower aliphatic ester, there are acetic methyl ester, acetic ethyl ester, acetic isopropyl ester, etc. These organic solvents are used either singly or as

a mixture of two or more solvents and they may be used either undiluted or as an aqueous solution. In case where they are used as an aqueous solution, its concentration is not necessarily defined since it differs depending upon the kind of membrane, degree of compaction and time of contact, etc.; however, in case where the alcohol is used, higher concentration achieves a better effect and in case where the ketone or ester is used, even lower concentration achieves a good effect. Room temperature is enough for contacting the membrane to the solvent or its aqueous solution but higher temperature is also applicable as case may require. As for time of contact, a very short period of several seconds is enough to display the effect; however, a period of several minutes to about one hour may be good in industrial processes. The removal of fouling, which is deemed to be simply attained, usually takes several hours for washing. While the recovery of decreased water flux due to compaction takes a wonderfully short period of time as mentioned above though it seems to be much troublesome.

No limitations may be set for the method of contact process and the process can be carried out with a semipermeable membrane module fitted to the equipment or otherwise separately.

The alcohols such as ethanol, isopropanol, etc. have strong sterilizing power, therefore they can perform the recovery of decreased membrane function and sterilization as well. They can achieve the simplification and time-saving of the process when they are applied to the separating membrane in the food and pharmaceutical industries.

The following examples are illustrative of the present invention, but are not to be construed as limiting the scope of the present invention.

Example 1

[I] Preparation of semipermeable membrane module

21.2 parts of anhydrous sodium carbonate and 20.2 parts of 4,4'-diaminodiphenyl ether were solved in 250 parts of anhydrous dimethyl sulfoxide, to which 37.5 parts of 4,4'-dichloro-3,3'-dinitro-diphenyl sulphon was added and the mixture was heated at 100°C for 20 hours with stirring. After the reaction was over, the reaction solution was added to a large excess of water to obtain 47.5 parts of orange vermilion colored polymer. The intrinsic viscosity of the polymer was 0.75.

The polymer was suspended in a mixed solvent consisting of 100 parts of methanol and 150 parts of water, to which 75 parts of Blankit. The mixture was heated at 75°C for one hour with stirring to reduce nitro group. After the reaction was over, the reaction product was added to a large quantity of water to dissolve inorganic salt thoroughly. The reaction product was filtrated, washed with water, and dried to obtain a grey colored polymer having the intrinsic viscosity of 0.65.

3.0 parts of thus obtained polymer was dissolved in 30.0 parts of N-methylpyrrolidone, to which 2.69 parts of phenyl chlorocarbonate was added. After the mixture was stirred at room temperature for 4 hours, the temperature of the reaction system was raised to 160°C and the reaction was continued for 6 hours. After the reaction was over, the reaction mixture was added to a large quantity of water to obtain a polymer. The intrinsic viscosity of the polymer was 0.83 and it was confirmed that the polymer was substantially polybenzimidazolone expressed by the following formula from infrared absorption spectrum and nuclear magnetic resonance spectrum.

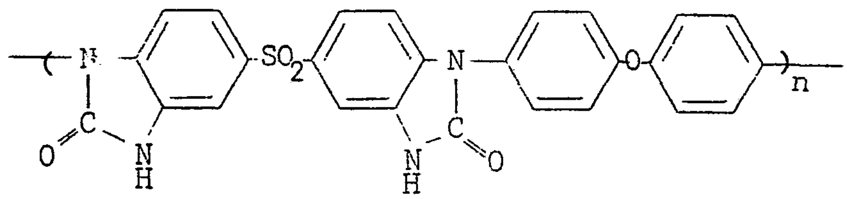

After dissolving 4.5 parts of lithium chloride in 85.0 parts of N-methylpyrrolidone, 15.0 parts of polybenzimidazolone was added thereto. The mixture was stirred thoroughly to obtain a homogeneous dope which was then filtrated to give a cast liquid.

A stainless steel molding tube having an internal diameter of 14.0 mm was held vertically and heated up to 130°C. With a projectile-shaped core, which was usually used in making a tubular membrane, being hung up in the molding tube, said dope was cast on the inner walls of the molding tube to the thickness of 300 μ and was dried for 6 minutes with air blown from the top of the molding tube at the rate of 20 ℓ/mm. The casting, still held inside the molding tube, was immersed in water, set to gel, and drawn out of the molding tube to give a tubular membrane.

The tubular membrane was wrapped around with a piece of nonwoven fabric having a thickness of 100 μ made from polyethylene terephthalate and inserted into a multiporous fiber glass tube impregnated with epoxy resin having an internal diameter of 13.7 mm to be made into a tubular module.

[II] <u>Reverse osmosis operation and recovery of water flux</u>

Products galvanized with zinc sulfate were rinsed with water and the used rinsings were collected and found to have the following composition:

Composition

| Component | Weight % |
| --- | --- |
| Zinc sulfate | 0.84 |
| Sodium acetate | 0.22 |

The reverse osmosis operation was conducted on thus collected rinsings with the use of a semipermeable membrane module obtained in the preceding item [I] under temperature of 25°C and pressure of 45 $kg/cm^2 \cdot G$ for 1,000 hours until fluxion of water decreased greatly. The module was then emptied of the liquid which was being treated and water flux was checked with the use of pure water under the conditions of 25°C and 42 $kg/cm^2 \cdot G$ to give a result of 37 $\ell/m^2 \cdot hr$. The check made for the same module with pure water before said reverse osmosis operation showed water flux of 83 $\ell/m^2 \cdot hr$. This tells that after the operation water flux decreased more than half the initial level. The membrane module was washed for one hour with an aqueous solution of $H_2SO_4$ having a pH of 2 to remove fouling and water flux was measured again with the use of pure water to show a result of 60.5 $\ell/m^2 \cdot hr$. The module thus washed with acid was further treated under the conditions mentioned in Table 1 below and water flux was recovered as shown in the same table.

Table 1

| Conditions of treatment | | Water flux after treatment ($\ell/m^2 \cdot hr$) |
|---|---|---|
| Treating solution | Conditions | |
| Aqueous solution of 20 wt % MEK | 15 min. immersion | 81 |
| Aqueous solutuion of 10 wt % MEK | 15 min. recycle | 80 |
| Aqueous solution of 7 wt % MEK | 15 min. recycle | 77 |
| Aqueous solution of 20 wt % EAC | 15 min. immersion | 75.5 |
| Aqueous solution of 10 wt % EAC | 15 min. recycle | 80.6 |
| Aqueous solution of 15 wt % ATN | 15 min. recycle | 75.0 |

Notes: MEK: Methyl ethyl ketone
EAC: Ethylene acetate
ATN: Acetone

Example 2

The following experiment was made with the use of a semipermeable membrane module obtained in the same way as in Example 1.

The reverse osmosis operation was conducted on the rinsings used in Watts nickel plating having the following composition under temperature of 30 to 35°C and pressure of 50 $kg/cm^2 \cdot G$.

Composition

| Component | Wt % |
|---|---|
| $NiSO_4$ | 1.2 |
| $NiCl_2$ | 0.23 |
| Boric acid | 0.15 |
| 2-Butyne-1,4 diol | 0.001 |
| Propargyl alcohol | 0.000015 |

The values of water flux referred to in this experiment is obtained from the operation conducted

on the rinsings having the abovementioned composition. The initial performance of the membrane module showed water flux of 66 $\ell/m^2 \cdot hr$ and rejection of 99% or more. After one-month operation, it showed water flux of 40 $\ell/m^2 \cdot hr$ and rejection of 99% or more, attesting a heavy decrease in water flux. When the membrane was washed at room temperature for one hour with an aqueous solution of HCl having a pH of 2, water flux was improved up to 52 $\ell/m^2 \cdot hr$ and rejection was more than 99%. When the process of 1-month operation and 1-hour washing was repeated for 6 consecutive months, water flux gradually decreased and at the end of 6-month period, water flux was recovered only to a level of 45 $\ell/m^2 \cdot hr$ even after the washing with an acid solution. When the membrane of such low water flux was recycle-treated with a 50 wt % isopropanol aqueous solution at room temperature for 30 minutes, water flux was improved up to 62 $\ell/m^2 \cdot hr$ and rejection was also more than 99%.

Example 3

Two experiments were made with the use of a semipermeable membrane modules obtained in the same way as in Example 1, one on a 10 wt % glucose aqueous solution as a liquid to be osmosed and the other on pure water, under operation temperature of 55°C and operation pressure of 50 $kg/cm^2 \cdot G$ for 800 hours. The module which had been used in the operation made on a 10 wt % glucose aqueous solution was subjected to the washing conducted at room temperature for 30 minutes with the use of a 1 wt % $Na_2CO_3$ aqueous solution and further to the recycle treatment for 15 minutes with the use of a 15 wt % ethyl acetate aqueous solution. On the other hand, the module which had been used in the operation made on pure water was subjected to the recycle treatment

only which was conducted at room temperature for 15 minutes with the use of a 15 wt % ethyl acetate aqueous solution. The performance of the membranes at the respective steps is shown in Table 2 below. In the table, however, water flux of the module in the column for a glucose aqueous solution shows measurements obtained from the operation conducted at 55°C under 50 $kg/cm^2 \cdot G$ with the use of a 0.5 wt % NaCl aqueous solution and water flux measurements obtained from the operation conducted with a glucose aqueous solution are given in parentheses.

Table 2

| Liquid to be osmosed | Performance of membrane | | | |
|---|---|---|---|---|
| | Initial step | After 800-hr operation | After washing with alkali | After treatment with ethyl acetate |
| 10 wt % glucose aqueous solution | 130 $\ell/m^2 \cdot hr$<br>(95)<br>96.5% | 52 $\ell/m^2 \cdot hr$<br>(39)<br>93.0% | 74 $\ell/m^2 \cdot hr$<br><br>95.5% | 96 $\ell/m^2 \cdot hr$<br>(76)<br>96.0% |
| Pure water | 135 $\ell/m^2 \cdot hr$ | 81 $\ell/m^2 \cdot hr$ | - | 101 $\ell/m^2 \cdot hr$ |

Example 4

21.9 g of triethylenetetramine was dissolved in 80 g of water, to which 7.4 g of triglycidylisocyanurate was added. The mixture was stirred and mixed and was then heated up to 50°C, which temperature was maintained for 3 hours to obtain a homogeneous solution. 3.6 g of sorbitol polyglycidyl ether was added to the solution with a dropping funnel over a period of 30 minutes with stirring while maintaining said temperature and was then left to cool down. The mixture was further allowed to stand for 20 hours. The solution thus obtained was filtrated and water was added to the filtrate to make the concentration of the condensation product 2.5 wt % (hereinafter this solution is referred to as "PEPA solution"). A porous membrane of polysulfone (60 μ in thickness; membrane constant $5.2 \times 10^{-2}$ g/cm$^2$·sec·atm) having a polyethylene terephthalate nonwoven fabric as a support material was immersed in said PEPA solution at room temperature for 2 minutes, taken out of the solution, and allowed to stand still for 10 minutes while being kept vertically.

Thus obtained membrane was immersed in a 1.5 % n-hexane solution of isophthaloyl chloride and trimesoyl chloride (isophthaloyl chloride: trimesoyl chloride = 5:1 (based on weight)) at room temperature for 2 minutes, was taken out of the solution, and left to stand still for 1 minute in the atmosphere to allow n-hexane to volatilize off the surface of the membrane. This membrane was heat-treated at 115 to 120°C for 10 minutes in a hot air dryer to obtain a cross-linked composite membrane. The reverse osmosis operation was conducted with the use of this composite membrane on a 0.5 wt % NaCl aqueous solution (free of organic compound) at 25°C under 42 kg/cm$^2$·G (hereinafter referred to as

"standard operation conditions") to show initial performance of water flux of 151.9 ℓ/$m^2$·hr and salt rejection of 98.2%. After this membrane was subjected to the operation on pure water at 50°C under 45 kg/$cm^2$·G for 6 hours, the membrane was again subjected to the operation on a 0.5 wt % NaCl aqueous solution at said temperature of 25°C under pressure of 42 kg/$cm^2$·G to evaluate the performance of the membrane. Water flux decreased to 96.7 ℓ/$m^2$·hr. The membrane was then immersed in a 75 wt % isopropanol aqueous solution for 5 minutes and the performance of the membrane was revived to have water flux of 145.8 ℓ/$m^2$·hr and salt rejection of 98.3%.

Example 5

A cross-linked composite membrane was prepared according to Example 4, wherein an aqueous solution of 2.5 wt % polyethyleneimine was used in the place of a PEPA solution which was used in Example 4. This membrane was subjected to the operation under the standard operation conditions to measure the performance of the membrane. The obtained initial performance showed water flux of 54.4 ℓ/$m^2$·hr and salt rejection of 98.3%.

After this membrane was subjected to the reverse osmosis operation on pure water at 50°C under 45 kg/$cm^2$·G for 6 hours, the performance of the membrane was measured according to the standard operation conditions. Water flux was found decreasing to 31.4 ℓ/$m^2$·hr.

The membrane was then immersed in an aqueous solution of 75 wt % ethanol and subjected again to the operation under the standard operation conditions to measure the performance of the membrane. Water flux was found recovering to 51.8 ℓ/$m^2$·hr and salt rejection was 98.4%.

Comparative Example 1

A mixture of 25 parts of cellulose acetate (E398-10 manufactured by Eastman), 45 parts of acetone, and 30 parts of formamido was dissolved with stirring and filtrated to provide a cast liquid. Following the same procedure as in Example 1, the cast liquid was cast on the inner walls of a stainless tube held vertically, immersed immediately in water maintained at 5°C to set to gel, then treated in hot water at 85°C, and drawn out of the stainless tube to give a tubular membrane. This membrane was wrapped with a piece of polyethylene terephthalate nonwoven fabric and inserted into a porous support tube made of FRP to obtain a tubular module. This module showed water flux of 36.8 $\ell/m^2 \cdot hr$ and salt rejection of 92.6%. When this module was immersed in a 75% ethanol aqueous solution for 30 minutes, water flux was found to be 48.6 $\ell/m^2 \cdot hr$ and salt rejection 43.8%. When the immersion was continued for another one hour, water flux was improved to 52.9 $\ell/m^2 \cdot hr$ while salt rejection decreased drastically to 9.9%.

Example 5

25.4 parts of isophthaloyl chloride was dissolved in 140.7 parts of dried tetrahydrofran and cooled to 0°C. A solution prepared by dissolving 13.5 parts of methaphenilene diamine in 140.7 parts of dried tetrahydrofran was poured into said solution in a thin stream over about 5 minutes with stirring to obtain a white dispersion liquid.

Another solution was prepared by dissolving 53 parts of anhydrous sodium carbonate in 100 parts of water and the solution was cooled to 8°C. While this solution was vigorously stirring, the abovementioned white dispersion liquid was added in about 5 seconds. Agitation was continued for another 2

minutes to obtain a white powdery polymer precipitate. The polymer thus obtained had an intrinsic viscosity of 2.48 and was found to be substantially polyamide expressed by the following formula:

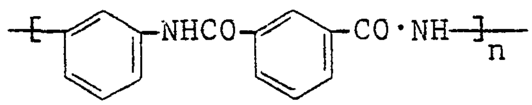

15 parts of thus obtained polyamide was added to a solution prepared by dissolving 6.7 parts of lithium chloride in 85 parts of N-methylpyrrolidone. The mixture was dissolved with stirring to make a homogeneous dope, which was then filtrated to obtain a cast liquid.

The cast liquid was cast to a thickness of 300 μ on a piece of polyethylene terephthalate nonwoven fabric having unit weight of 135 $g/m^2$, dried at 130°C for 7.5 minutes, immersed in water to set to gel to obtain a polyamide reverse osmosis membrane. The obtained membrane was subjected to the operation on a 0.5% NaCl aqueous solution at 25°C under 42 $kg/cm^2 \cdot G$. Water flux was 28 $\ell/m^2 \cdot hr$ and salt rejection was 95.3%.

The membrane was subjected to the operation on pure water at 40°C under 42 $kg/cm^2 \cdot G$ and it was found that its initial water flux of 40.5 $\ell/m^2 \cdot hr$ was reduced to 26.5 $\ell/m^2 \cdot hr$ after the 200-hr operation, and further to 24.6 $\ell/m^2 \cdot hr$ after 500-hr operation. When this membrane was immersed in a 50 wt % isopropyl alcohol aqueous solution for 15 minutes, water flux was revived to 38.8 $\ell/m^2 \cdot hr$.

Comparative Example 2

A membrane washed with a $H_2SO_4$ aqueous solution having a pH of 2 and having water flux of 60.5 $\ell/m^2 \cdot hr$ was prepared in the same way as in Example 1.

The membrane was treated with N-methylpyrrolidone, dioxane, ethylene glycol and glycerin respectively under the conditions indicated in Table 3 below. The obtained result is shown in the table.

Table 3

| Conditions | | | Water flux after treatment (ℓ/$m^2$·hr) |
|---|---|---|---|
| Solvent | Concentration (wt % in $H_2O$) | Method of treatment | |
| NMP | 10 | 1-hr immersion | 59.0 |
| " | 20 | " | 63.0 |
| Dioxane | 10 | 30-min recycle | 55.0 |
| EG | 20 | " | 61.0 |
| " | 100 | 5-hr immersion | 58.0 |
| Glycerin | 50 | " | 59.0 |

Example 6

A cross-linked composite membrane was obtained from a PEPA solution in the same way as in Example 4. The reverse osmosis operation was conducted with the use of this membrane on an aqueous solution of 1500 ppm glucose under temperature of 35°C and pressure of 35 kg/$cm^2$·G. Initial water flux of 142 ℓ/$m^2$·hr decreased to 121 ℓ/$m^2$·hr after the 1,000-hr operation.

This membrane was washed for 30 minutes with a mixed aqueous solution (pH 10.2) of $Na_2CO_3$ and $NaHCO_3$ having the molar concentration of 0.02 but its water flux was recovered up to only 125 ℓ/$m^2$·hr.

The membrane was then subjected to the recycle treatment for 15 minutes by use of an aqueous solution of 10 wt % methyl ethyl ketone and water flux was improved up to 145 ℓ/$m^2$·hr.

WHAT WE CLAIM IS:

1. A method which comprises treating a semipermeable membrane which has an active layer substantially consisting of a polymeric material having bond units containing a bond expressed by the following formula (I)

$$-\underset{\underset{O}{\|}}{C}-N\langle \quad \ldots\ldots\ldots\ldots\ldots\ldots\ldots\ldots\ldots \quad (I)$$

in the polymer chain with at least one kind of organic solvent, or its aqueous solution, selected from a group of lower aliphatic alcohol, lower aliphatic ketone and lower aliphatic ester when water flux of said semipermeable membrane is decreased due to the membrane's compaction resulting from the operation conducted under the conditions which satisfy the following formula (II)

$$P \geqq -\frac{2}{3}T + 47 \quad \ldots\ldots\ldots\ldots\ldots\ldots \quad (II)$$

(where P indicates operation pressure ($kg/cm^2 \cdot G$) and T indicates operation temperature (°C), satisfying $P \geqq 20$ ($kg/cm^2 \cdot G$) and $T \geqq 5$ (°C) respectively.

2. A method according to Claim 1, wherein the bond expressed by said formula (I) is adjacent to the aromatic ring.

3. A method according to Claim 1, wherein said polymeric material comprises at least 30 mole %, based on the entire recurring units, of at least one recurring unit of the following formula

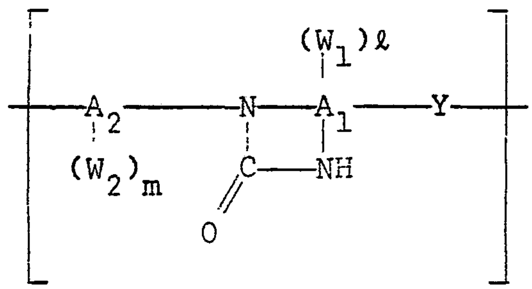 ....(III)

where $A_1$ indicates an aromatic group having a valence of $(3 + \ell)$, with two nitrogen atoms and $W_1$ bonded to the nuclear carbon atoms of the aromatic group $A_1$; $A_2$ indicates an aromatic group having a valence of $(2 + m)$; Y is -O- or $-\underset{R_1}{N}-$, in which $R_1$ is a hydrogen atom or a monovalent hydrocarbon residue; and the two nitrogen atoms bonded to $A_1$ are bonded to the ring carbon atoms at the ortho-position of the aromatic group $A_1$; $\ell$ and m are identical or different, each representing an integer of 0 to 3; when Y is $-\underset{H}{N}-$ and one of $W_1$ group is bonded to the ring carbon atom at the ortho-position of the aromatic group $A_1$ together with Y, said $W_1$, Y and $A_1$ can form a 5-membered ring same as

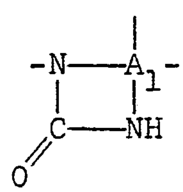

in which all symbols are the same as defined above; and when $W_1$ does not form a 5-membered ring, $W_1$ and $W_2$ are identical or different and represent at least one group selected from substituted nitrogen-containing groups derived from a primary amino group.

4. A process according to Claim 3, wherein at least a part of the recurring unit of formula (III) is a recurring unit of the following formula

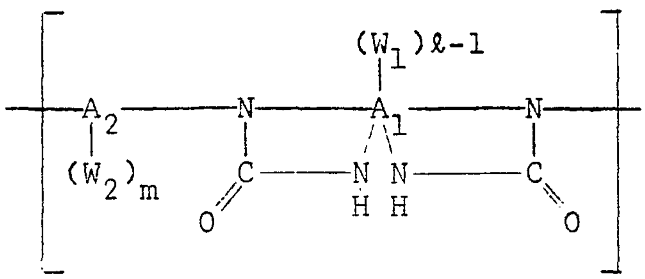

where $A_1$, $A_2$, $W_1$, $W_2$, $\ell$ and m are as defined with regard to formula (III), with the proviso that $\ell - 1 \geqq 0$.

5. A process according to Claim 1, wherein said polymeric material contains a structural unit of the formula

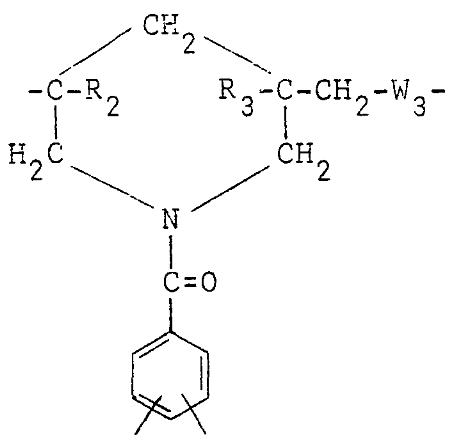

where each of $R_2$ and $R_3$ indicates a hydrogen atom or a methyl group, and $W_3$ indicates a direct bonding or a sulfonyl group ($-SO_2-$).